# FASCICULE DE BREVET EUROPEEN

(11) **EP 0 749 983 B1**
(45) Date de publication et mention de la délivrance du brevet: **29.11.2000**
(21) Numéro de dépôt: 96107766.6
(22) Date de dépôt: 15.05.1996
(51) Int. Cl.: C08F 4/02, C08F 10/00, C01F 5/30

(54) **Particules comprenant du chlorure de magnésium, leur procédé d'obtention et particules de polyoléfine**
Magnesiumchloridenthaltende Teilchen, Verfahren zu ihrer Herstellung und Polyolefinteilchen
Particles containing magnesium chloride, method for obtaining them and polyolefin particles

(30) Priorité: 21.06.1995 FR 9507397
(43) Date de publication de la demande: 27.12.1996
(73) Titulaire: Atofina, 92800 Puteaux (FR)
(72) Inventeur: Brun, Claude, 64320 Idron (FR)

(56) Documents cités:
- EP-A- 0 099 774
- EP-A- 0 488 856
- FR-A- 2 658 498

## Description

La présente invention concerne un procédé de fabrication de particules comprenant du chlorure de magnésium et pouvant faire office de support de composante catalytique solide pour la polymérisation des oléfines.

On sait réaliser des supports de composante catalytique solide par précipitation de MgCl₂ à partir d'une solution organique d'un dérivé organique du magnésium, d'un agent chlorant de ce dérivé organique du magnésium et d'un éther-oxyde comme l'éther diisoamylique. En l'absence d'éther diisoamylique, ce procédé mène à des particules à la morphologie altérée, ainsi qu'à la présence de fines particules indésirables. Ceci est également le cas lorsque l'on tente, dans ce procédé de remplacer l'éther diisoamylique par le tétrahydrofurane (THF).

La demande de brevet FR 2529208 décrit un tel procédé faisant usage d'éther diisoamylique, lequel mène à des particules sphériques contenant de l'éther diisoamylique. Lorsque l'on souhaite utiliser celles-ci pour fabriquer une composante catalytique solide stéréosélective, il convient, de substituer à cet éther, dans une étape supplémentaire, un donneur d'électron tel qu'un diester aromatique, capable de conférer à la composante catalytique les propriétés de stéréosélectivité souhaitées. Autre inconvénient de ces particules, après transformation en composante catalytique solide, elles mènent après polymérisation à des particules de polymère sphériques particulièrement aptes à accumuler les charges électrostatiques ce qui peut être à l'origine de la formation d'agglomérats ou de bouchons à l'intérieur d'installations industrielles dans lesquelles ces particules de polymère sont convoyées. En particulier, ce problème se rencontre dans les réacteurs de polymérisation en phase gazeuse dans lesquels les particules de polymère sphérique forment des agglomérats à la paroi, lesquels, en se détachant brusquement provoquent des perturbations dans le régime hydrodynamique du réacteur et l'obstruction des soutirages. La tendance de la forme sphérique d'une particules à favoriser l'accumulation des charges électrostatiques peut également se retrouver au niveau des particules de support elles-mêmes ainsi qu'au niveau des particules de composante catalytique solide fabriquées à partir desdites particules de support.

La présente invention concerne un procédé de fabrication de particules comprenant du chlorure de magnésium comprenant une étape de mise en contact entre :
- des germes contenant plus de 30% en poids de chlorure de magnésium,
- un dérivé organique du magnésium,
- un agent chlorant du dérivé organique du magnésium.

Les particules solides peuvent également être appelées "germes" dans la présente demande. Les particules comprenant du chlorure de magnésium et obtenues par le procédé selon l'invention peuvent également être appelées particules de support dans la présente demande.

Le procédé selon l'invention présente notamment les avantages suivants :
1. Il est possible d'influencer la forme des particules de support par la forme des particules de germe. Par exemple, si les germes ont une forme allongée, les particules de support auront également une forme allongée. Il est donc possible, grâce au procédé selon l'invention d'optimiser la forme des particules de support, de composante catalytique réalisée à partir des particules de support et du polymère finalement synthétisé en fonction des caractéristiques physiques recherchées comme par exemple la coulabilité ou l'aptitude à ne pas accumuler les charges électrostatiques de ces particules.
2. Il est possible d'influencer la taille des particules de support en modifiant la taille des particules de germe. Ainsi, en augmentant la taille des particules de germe, on peut augmenter la taille des particules de support.
3. Il est possible d'influencer la taille des particules de support en modifiant le rapport quantité de dérivé organique du magnésium sur quantité de support. Ainsi, en augmentant ce rapport, on peut augmenter la taille des particules de support.
4. Il est possible d'influencer la distribution des tailles de particule de support en jouant sur la distribution des tailles de particule des germes. En effet, la distribution de la taille des particules de support, de la composante catalytique qui en dérive et du polymère qui en dérive, mesurée par le SPAN (voir ci-après), est sensiblement voisine de la distribution de la taille des particules des germes utilisés. Le SPAN est égal au rapport (D90-D10)/D50 dans lequel D90, D10 et D50 représentent le diamètre en dessous duquel se trouvent respectivement 90 %, 10 % et 50 % en poids des particules. Généralement, le SPAN du support n'excède pas plus de 50 %, voire 20 % de plus que le SPAN des germes et est même généralement inférieur à ce dernier.
5. Le procédé selon l'invention est particulièrement intéressant lorsque l'on recherche des distributions de tailles de particules (support, composante catalytique solide ou polymère) étroites puisque la distribution des tailles de particules du support est généralement plus resserrée que la distribution des tailles de particules des germes.
6. Il n'est pas nécessaire d'ajouter un éther au milieu de mise en contact. En cas d'absence d'éther dans le milieu de mise en contact et dans les germes, les particules de support ne contiennent pas d'éther.
7. Si l'on souhaite que les particules de support contiennent un éther pour, par exemple, modifier leur organisation cristalline, il est possible d'y parvenir en introduisant un éther dans le milieu de mise en contact. Cet éther peut être le THF. La présence de THF et l'absence d'éther diisoamylique lors de la mise en contact ne produit pas de dégradation de la forme des particules ni ne se traduit par la formation de fines, ce qui signifie que le contrôle de la morphologie des particules est conservé. Par ailleurs, si pour une raison quelconque on le souhaite, il est possible d'ajouter l'éther diisoamylique dans le milieu de la mise en contact.
8. Les particules de support présentent une surface sensiblement exempte d'angulosités lorsqu'elles sont observées au grossissement 200 au microscope électronique à balayage. Ce relief régulier de surface confère à ces particules une excellente coulabilité. Cet avantage est obtenu même si les germes de départ présentent des angulosités, par exemple s'ils ont l'apparence de cristaux. Ainsi, pour obtenir des particules de support présentant une bonne coulabilité, il est possible d'utiliser des particules de germe présentant une moins bonne coulabilité.
9. Les particules de composante catalytique solide réalisées à partir des particules de support présentent une surface sensiblement exempte d'angulosités lorsqu'elles sont observées au grossissement 200 au microscope électronique à balayage. Ce relief régulier de surface confère à ces particules une excellente coulabilité.
10. Les particules de polymère obtenues par polymérisation ou copolymérisation en présence des particules de composante catalytique solide présentent une surface sensiblement exempte d'angulosités lorsqu'elles sont observées au grossissement 20 au microscope optique. Ce relief régulier de surface confère à ces particules une excellente coulabilité.

De préférence, les germes contiennent moins de 90 % en poids de carbone.

Les germes sont à base de chlorure de magnésium, c'est-à-dire qu'ils contiennent plus de 30 % en poids de chlorure de magnésium. De manière encore préférée ces germes contiennent du chlorure de magnésium sous une forme apte à fixer du chlorure de titane. Pour savoir si un germe à base de chlorure de magnésium est sous une telle forme on peut procéder au test suivant :

Dans un réacteur en verre, équipé d'un filtre en son fond, purgé à l'azote de 250 cm³, équipé d'une régulation de température et d'un système d'agitation, on introduit 10 g de germes, puis 33 cm³ de TiCl₄ pur. On agite ce mélange une heure à 80° C, puis on filtre. On lave ensuite le solide obtenu dans le réacteur avec 50 cm³ de toluène, sous agitation durant une heure à 80° C. On répète l'opération de filtration puis de lavage au toluène trois fois. Le solide obtenu est filtré puis séché à 80° C sous un courant d'azote à la pression atmosphérique pendant trois heures, puis à 100° C pendant deux heures sous un vide dont la pression résiduelle d'azote est 10 Pa. Le solide poudreux est récupéré sous atmosphérique inerte (par exemple : Argon ou azote) et l'on analyse sa teneur en titane.

A l'issue de ce traitement, si les particules de germe contiennent plus de 0,2 % en poids de titane, ces particules de germe, avant le test, peuvent être considérées comme étant sous une forme apte à fixer du chlorure de titane. A titre d'exemple de germe à base de chlorure de magnésium sous une forme apte à fixer du chlorure de titane on peut citer :
- les formes β ou δ du chlorure de magnésium ou un mélange de ces deux formes, la forme δ pouvant par exemple être obtenue par broyage de MgCl₂ anhydre commercial,
- les complexes de formule (MgCl₂.n solvant) dans laquelle "solvant" est un solvant complexant de MgCl₂ et n représente le nombre de mole de solvant complexant par mole de MgCl₂, la limite supérieure de n étant celle pour laquelle le complexe n'est plus solide. A titre d'exemple, le solvant complexant peut-être le tétrahydrofurane (THF) ou un alcool de formule ROH dans laquelle, R peut être un groupement hydrocarboné comportant de un à six atomes de carbones. A titre d'exemple, n peut aller de 1 à 2, le complexe (MgCl₂.1,5THF) en étant un exemple.
- les composantes catalytiques solides de type Ziegler-Natta à base de magnésium, de chlore et de titane. Ces derniers type de germe satisfont au test décrit ci-dessus puisque, même s'ils n'absorbent pas ou très peu de titane pendant l'étape de traitement au TiCl4 du test, en fin de test ils contiennent au moins 0,2.% de titane, conformément à ce qu'il est attendu d'un germe à base de chlorure de magnésium sous une forme apte à fixer du chlorure de titane.

Des germes présentant des distributions granulométriques très diverses peuvent être utilisés.

Généralement, on utilise des germes dont le diamètre moyen va de 1 à 100 µm et dont le SPAN va de 0,4 à 6. Le SPAN des germes peut être inférieur à 3.

Le dérivé organique du magnésium utilisé pour l'étape de mise en contact peut être de formule R¹MgR² ou peut être un complexe de formule (R¹MgR²).x(Al(R³)₃) dans lesquelles R¹ et R², pouvant être identiques ou différents, représentent des radicaux alkyles contenant de 2 à 12 atomes de carbone et R3 représente un radical alkyle contenant de 1 à 12 atomes de carbone. Comme dérivé organique du magnésium, on peut citer le n-butyléthylmagnésium, le n-dibutylmagnésium, le n-butyl-n-octylmagnésium, le n-butyl-éthylmagnésium, le n-butyl(1-méthylpropyl)magnésium, le (n-butyl)_{1,5} (n-octyl)_{0,5} magnésium.

L'agent chlorant doit être capable de réagir avec le dérivé organique du magnésium de façon à substituer au moins partiellement les radicaux alkyles de ce dérivé par des atomes de chlore de façon à former des liaisons Mg-Cl. Cet agent chlorant, pouvant être organique ou inorganique, peut être choisi parmi les composés de formule R⁴Cl dans laquelle R⁴ représente un radical alkyle secondaire ou tertiaire contenant de 3 à 12 atomes de carbone. A titre d'exemple d'agent chlorant, on peut citer le chlorure de tertiobutyle, le tétrachlorure de silicium, l'acide chlorhydrique.

Généralement, pour la mise en contact, on utilise des quantités de dérivé organique du magnésium et d'agent chlorant telles que le rapport molaire Cl/Mg va de 1 à 10.

Lorsqu'on ne souhaite pas chlorer entièrement le dérivé organique du magnésium, on pourra par exemple choisir un rapport molaire Cl/Mg compris entre 1 et 2. En procédant de cette dernière façon, en raison de la présence de radicaux de type R¹ et/ou R² et/ou R³ restant dans les particules de support, ces dernières seront sensiblement réductrices vis-à-vis des composés de métal de transition utilisés pour transformer le support en composante catalytique, ce qui peut présenter un intérêt suivant le type de composante catalytique que l'on se propose de préparer.

La mise en contact est généralement réalisée en présence d'un solvant inerte vis-à-vis des différents ingrédients destinés à être mis en contact, c'est-à-dire généralement un solvant apolaire et aprotique.

Le solvant est inerte si d'une part, sa présence ne modifie pas la nature des liaisons covalentes ni au sein des molécules des ingrédients utilisés pour la mise en contact, ni au sein des molécules issues de la réaction entre les ingrédients utilisés pour la mise en contact, et d'autre part, s'il ne solubilise ni les germes, ni le support à plus de 10% en poids.

Ce solvant peut généralement être un hydrocarbure aliphatique linéaire ou ramifié contenant de 3 à 12 atomes de carbone tel que le n-hexane, l'heptane, le décane, l'isodécane, un hydrocarbure alicyclique contenant de 5 à 12 atomes de carbone tel que le cyclohexane ou la décaline, un hydrocarbure aromatique contenant de 6 à 12 atomes de carbone tel que le toluène, le xylène, le benzène, l'éthylbenzène.

Bien entendu, le solvant doit être choisi de façon à solubiliser les réactifs choisis compte tenu de leur nature, et de leur concentration, suivant les conditions opératoires adoptées.

Généralement, le solvant est présent en quantité suffisante pour qu'en fin de préparation des particules de support, celles-ci soient en suspension.

Généralement, le solvant est présent en quantité telle qu'en fin de préparation des particules de support le milieu de mise en contact contienne de 70 à 300 grammes de support par litre de liquide.

De préférence, le rapport molaire de la quantité de magnésium apporté par le dérivé organique du magnésium sur la quantité de magnésium contenue dans les germes va de 0,01 à 10.

Bien que cela ne soit pas indispensable, il n'est pas exclu que la mise en contact soit réalisée en présence d'un donneur d'électrons tel que ceux mentionnés plus loin en tant que possible donneur d'électron interne. Ceci est un moyen d'introduire un donneur d'électron interne dans le support et dans la composante catalytique qui en résulte.

La mise en contact peut être réalisée entre 10 et 140° C et de préférence entre 40 et 110° C. Il n'est pas exclu de la réaliser sous pression si la volatilité de certaines espèces du milieu le nécessite.

La réaction entre le dérivé organique du magnésium et l'agent chlorant se traduit généralement par un dégagement de chaleur. Il est préférable de mettre en contact ces deux réactifs suffisamment lentement pour que la température du milieu reste dans le domaine ci-dessus mentionné.

De préférence, la mise en présence entre le dérivé organique du magnésium et l'agent chlorant (les germes étant déjà en présence de l'un ou l'autre de ces réactifs) est réalisée en au moins une heure.

De préférence, on met d'abord en présence les germes, l'éventuel solvant inerte et le dérivé organique du magnésium, puis l'on ajoute à ces précédents constituants l'agent chlorant.

Lorsque la totalité des ingrédients ont été mis en contact, on peut maintenir les conditions opératoires, par exemple une heure, de façon à mieux épuiser les réactifs.

De préférence, la mise en contact est réalisée sous agitation. Celle-ci est suffisamment modérée pour ne pas provoquer d'attrition des particules présentes.

Après la mise en contact, les particules de support peuvent être isolées par filtration, lavées par un solvant hydrocarboné tel que l'hexane ou l'heptane puis séchées, par exemple à 80°C, 2 heures, sous un balayage d'azote à la pression atmosphérique.

Il est possible de réaliser la mise en contact en présence d'un dérivé organique de l'aluminium. La présence d'un de ces dérivés dans le milieu de mise en contact se traduit généralement par une réduction de la taille des cristallites à l'intérieur du support et en conséquence par une activité améliorée en polymérisation. Ce dérivé organique de l'aluminium peut être un composé de formule R¹R²R³Al envisagé ci-après comme cocatalyseur. Ce peut également être un aluminoxane, c'est-à-dire d'un composé comprenant au moins un enchaînement Al-O-Al et exempt d'enchaînement Si-O, ou un aluminosiloxane, c'est-à-dire d'un composé comprenant au moins un enchaînement Al-O-Si.

La présence d'un aluminoxane, lors de la mise en contact, se traduit par le fait que le polymère ou copolymère réalisé par polymérisation en présence d'une composante catalytique solide elle-même réalisée à partir d'un support issu du procédé selon l'invention, présente une polymolécularité, représentée par Mw/Mn, plus grande que si l'aluminoxane n'avait pas été présent lors de la ladite mise en contact.

L'aluminoxane peut être un de ceux envisagés ci-après comme cocatalyseur.

L'aluminoxane peut être présent lors de la mise en contact de façon à ce que le rapport molaire du magnésium apporté par le dérivé organique du magnésium sur l'aluminium de l'aluminoxane aille de 1 à 1000 et de préférence de 10 à 200.

La présence d'un aluminosiloxane lors de la mise en contact se traduit par le fait que le polymère ou copolymère réalisé par polymérisation en présence d'une composante catalytique solide elle-même réalisée à partir d'un support issu du procédé selon l'invention, présente une polymolécularité, représentée par Mw/Mn, plus faible que si l'aluminosiloxane n'avait pas été présent lors de ladite mise en contact. L'aluminosiloxane peut par exemple être de formule R¹R²Al-O-SiR³R⁴R⁵ dans laquelle R¹, R², R³, R⁴ et R⁵, pouvant être identiques ou différents, représentent un radical alkyl contenant de 1 à 12 atomes de carbone, et mieux, de 1 à 6 atomes de carbone, ou encore l'hydrogène pour, de préférence, au maximum trois de ces radicaux, ou encore le chlore pour, de préférence, au maximum trois de ces radicaux.

L'aluminosiloxane peut être présent lors de la mise en contact de façon à ce que le rapport molaire du magnésium apporté par le dérivé organique du magnésium sur la quantité d'enchaînement Al-O-Si aille de 1 à 1000 et de préférence de 10 à 200.

Les particules de support peuvent ne pas contenir d'éther de formule R^{a}-O-R^{b} dans laquelle R^{a} et R^{b} sont des radicaux alkyle si aucun de ces éthers n'a été introduit lors de leur procédé de fabrication et en particulier ni dans les particules de germe, ni dans le milieu de mise en contact.

De plus, ces particules peuvent ne pas contenir d'éther cyclique tel que le tetrahydrofurane ou dioxane si aucun de ces éthers n'a été introduit lors de leur procédé de fabrication, et en particulier ni dans les particules de germes, ni dans le milieu de mise en contact.

Ces particules peuvent contenir des atomes d'aluminium, généralement jusqu'à 5 % en poids, si un dérivé organique de l'aluminium a été ajouté lors de la mise en contact ou si le dérivé organique du magnésium contient lui-même de l'aluminium. Si un aluminosiloxane a été ajouté lors de la mise contact, les particules de support peuvent contenir du silicium, par exemple jusqu'à 5 % en poids.

Ces particules peuvent présenter une distribution granulométrique très resserrée, dont le SPAN peut être inférieur à 2,5 voire inférieur à 1.

Le SPAN des particules de support peut généralement être inférieur à 2,5 si le SPAN des germes est inférieur à 3.

Le SPAN des particules de support peut généralement être inférieur à 1 si le SPAN des germes est inférieur à 1,3.

Dans ce qui suit, on entend par grand diamètre d'une particule la distance entre les deux points les plus éloignés de cette particule. Par petit diamètre d'une particule, on désigne la distance entre les deux points les plus éloignés de cette particule compris dans un plan perpendiculaire au grand diamètre. Les rapports moyens des diamètres des particules sont déterminés en calculant la moyenne des rapports du grand sur le petit diamètre des particules après observation au microscope électronique ou optique (suivant leur taille) d'un nombre statistiquement suffisant de particules.

Le procédé selon l'invention permet d'obtenir un ensemble de particules comprenant du MgCl₂. Ces particules peuvent servir de support de composante catalytique pour la polymérisation des oléfines. Par la suite, ces particules peuvent être appelées particules de support.

Dans ce qui suit, Ds et ds représentent respectivement les grand et petit diamètres des particules de support et Dg et dg représentent respectivement les grand et petit diamètres des particules de germe. Si l'on augmente le rapport moyen (Dg/dg)ₘ, on augmente le rapport moyen (Ds/ds)ₘ. D'un autre coté, si l'on augmente le rapport de la quantité de dérivé organique du magnésium sur la quantité de germes, on tend à diminuer le rapport (Ds/ds)ₘ. Par des tests de routine, l'homme du métier peut trouver, compte tenu du rapport (Ds/ds)ₘ qu'il souhaite obtenir et du rapport de la quantité de dérivé organique du magnésium sur la quantité de germes qu'il souhaite mettre en oeuvre, le rapport moyen (Dg/dg)ₘ qui convient. Ainsi, on peut généralement obtenir un rapport moyen (Ds/ds)ₘ > 1,3 si les germes sont tels que le rapport (Dg/dg)ₘ > 1,4. Bien entendu, au sein d'un tel ensemble, au moins une particule présente un rapport de son grand diamètre sur son petit diamètre supérieur à 1,3. De même, on peut généralement obtenir un rapport (Ds/ds)ₘ > 1,5 si les germes sont tels que le rapport (Dg/dg)ₘ > 1,6. Bien entendu, au sein d'un tel ensemble, au moins une particule présente un rapport de son grand diamètre sur son petit diamètre supérieur à 1,5. De même, on peut généralement obtenir un rapport (Ds/ds)ₘ > 2 si les germes sont tels que le rapport (Dg/dg)ₘ > 2,1. Bien entendu, au sein d'un tel ensemble, au moins une particule présente un rapport de son grand diamètre sur son petit diamètre supérieur à 2. De même, on peut généralement obtenir un rapport (Ds/ds)ₘ > 3 si les germes sont tels que le rapport (Dg/dg)ₘ > 3,1. Bien entendu, au sein d'un tel ensemble, au moins une particule présente un rapport de son grand diamètre sur son petit diamètre supérieur à 3.

Par ailleurs, les particules de support peuvent posséder sensiblement un axe de révolution contenant leur grand diamètre. Ceci est en particulier le cas lorsque les germes utilisés pour réaliser le support se présentent sous la forme de polyèdre possédant sensiblement deux plans de symétrie sensiblement perpendiculaires entre eux.

Ces polyèdres peuvent être sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaires étant inférieure à la plus petite distance (d) séparant les deux cotés opposés des grandes faces allongées. De telles particules peuvent être en MgCl₂.1,5THF comme celles dont la préparation est décrite dans l'exemple 1 du brevet US 3,212,132.

Ces polyèdres peuvent être sensiblement réguliers et posséder de 10 à 18 faces en nombre pair dont les faces deux à deux symétriquement opposées sont sensiblement parallèles. De telles particules peuvent être en MgCl₂.1,5THF comme celles dont la préparation est décrite dans l'exemple 1 de la demande de brevet dont le numéro de publication est EP 0 370 267 A1.

Une composante catalytique solide pour la polymérisation des oléfines peut être obtenue par association d'un composé d'un métal de transition aux particules de support. Ce métal de transition peut être le titane, le zirconium, le hafnium, le chrome, le vanadium ou tout autre métal capable dans des conditions adaptées de catalyser la polymérisation des oléfines. Par exemple, Une composante catalytique solide pour la polymérisation des oléfines peut être obtenue par association du support, d'un composé du titane, de chlore, éventuellement un composé d'aluminium, éventuellement un donneur ou accepteur d'électrons ainsi que de tout autre composé utilisable dans les composante solides de type Ziegler-Natta. Les particules de composante catalytique présentent, si Dc et dc représentent respectivement leur grand et petit diamètres, généralement un rapport moyen (Dc/dc)ₘ sensiblement égal au (Ds/ds)ₘ du support utilisé pour les réaliser. Ainsi, par le procédé selon l'invention, il est possible de réaliser des ensembles de particules de composante dont le (Dc/dc)ₘ est supérieur à 1,3 , voire 1,5 , voire 2, voire 3. Bien entendu, au sein de tels ensembles, au moins une particule présente un rapport de son grand diamètre sur son petit diamètre respectivement supérieur à 1,3 , 1,5 , 2 , 3. De plus, la morphologie des particules de composante est sensiblement identique à celle des particules de support utilisées pour les réaliser. Les particules de composante peuvent donc présenter sensiblement un axe de révolution contenant leur grand diamètre si les particules de support utilisées pour les réaliser présentent sensiblement un axe de révolution contenant leur grand diamètre.

Le composé du titane peut être choisi parmi les composés chlorés du titane de formule Ti-(OR)ₓCl₄₋ₓ dans laquelle R représente un radical hydrocarboné aliphatique ou aromatique contenant de un à quatorze atomes de carbone, ou représente COR¹ avec R¹ représentant un radical hydrocarboné aliphatique ou aromatique contenant de un à quatorze atomes de carbone et x représente un nombre entier allant de 0 à 3.

Le chlore présent dans la composante catalytique solide peut provenir directement de l'halogénure de titane. Il peut également provenir d'un agent chlorant indépendant tel que l'acide chlorhydrique, le tétrachlorure de silicium ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle et les silanes tels que les alcoxysilanes aromatiques, alicycliques ou aliphatiques. Conviennent notamment comme donneur d'électrons les composés tels que paratoluates de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, le phényltriéthoxysilane, le cyclohexylméthyldiméthoxysilane et le dicyclopentyldiméthoxysilane. Le donneur d'électron peut également être l'un de ceux cités dans la demande de brevet EP 0361493. L'accepteur d'électrons est un acide de Lewis, choisi de préférence parmi le chlorure d'aluminium, le trifluorure de bore, le chloranile ou encore les alkylaluminiums, les halogénoalkylaluminiums et alkylmagnésiums.

Des polymères peuvent être obtenus par polymérisation d'au moins une oléfine en présence de la composante catalytique par les procédés en suspension, en solution, en phase gazeuse ou en masse. Dans la présente demande, on considère que le terme polymère recouvre les termes copolymères et prépolymère.

Les particules de polymère présentent, si Dp et dp représentent respectivement leur grand et petit diamètres, généralement un rapport moyen (Dp/dp)ₘ sensiblement égal au (Dc/dc)ₘ de la composante catalytique utilisée pour les réaliser. Ainsi, par le procédé selon l'invention, il est possible de réaliser des ensembles de particules de polymère dont le (Dp/dp)ₘ est supérieur à 1,3 , voire 1,5 , voire 2, voire 3. Bien entendu, au sein de tels ensembles, au moins une particule présente un rapport de son grand diamètre sur son petit diamètre respectivement supérieur à 1,3 , 1,5 , 2 , 3. De plus, la morphologie des particules de composante est sensiblement conservée pendant la polymérisation. Les particules de polymère peuvent donc présenter sensiblement un axe de révolution contenant leur gros diamètre si les particules de composante utilisées pour les réaliser présentent sensiblement un axe de révolution contenant leur gros diamètre.

Les oléfines pouvant être utilisées pour la polymérisation, sont par exemple les oléfines comportant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges. Le terme polymérisation dont il est fait usage dans la présente demande recouvre donc des réactions de copolymérisation, et le terme polymère recouvre des copolymères.

Parmi les mélanges d'alpha-oléfine, on préfère un mélange d'éthylène et d'au moins une alpha-oléfine contenant de trois à huit atomes de carbone, le pourcentage d'éthylène dans le mélange étant généralement supérieur à 90 % en poids.

Les polymères obtenus présentent généralement une masse moléculaire moyenne en poids comprise entre 5000 et 400000.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à douze atomes de carbone ou un mélange de ces hydrocarbures. Pour un procédé de polymérisation en suspension, on peut utiliser par exemple le n-heptane, le n-hexane, l'isohexane, l'isopentane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que l'oléfine ou les oléfines soient essentiellement en phase vapeur.

Un cocatalyseur capable d'activer le titane de la composante catalytique doit être présent pendant la polymérisation. Ce cocatalyseur peut être tout cocatalyseur de composante catalytique de type Ziegler-Natta. En particulier, ce cocatalyseur peut être un dérivé organique de l'aluminium.

Ce dérivé organique de l'aluminium peut être un dérivé de formule R¹R²R³Al dans laquelle R¹, R² et R³ pouvant être identiques ou différents, représentent chacun, soit un atome d'halogène, soit un groupe alkyl contenant de 1 à 20 atomes de carbone, l'un au moins de R¹, R² ou R³ représentant un groupe alkyl. A titre d'exemple de composé adapté, on peut citer le dichlorure ou dibromure d'éthylaluminium, le dichlorure ou dibromure d'isobutylaluminium, le chlorure ou bromure de diéthylaluminium, le chlorure ou bromure de di-n-propylaluminium, le chlorure ou bromure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule 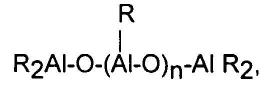 ou cyclique de formule 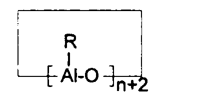 R représentant un radical alkyl comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyl. Par ailleurs, par cocatalyseur, on entend également les mélanges des composés précités.

Les quantités de cocatalyseur utilisées lors de la polymérisation doivent être suffisantes pour activer le titane. Généralement, on en introduit une quantité telle que le rapport atomique de l'aluminium apporté par le cocatalyseur sur le titane que l'on souhaite activer aille de 0,5 à 10000 et de préférence de 1 à 1000.

Les procédés de polymérisation en solution, en suspension, en masse, ou en phase gazeuse peuvent faire intervenir un agent de transfert de chaînes, de manière à contrôler l'indice de fusion du polymère à produire. Comme agent de transfert de chaîne, on peut utiliser l'hydrogène, que l'on introduit en quantité pouvant aller jusqu'à 90 % et se situant de préférence entre 0,01 et 60 % en mole de l'ensemble oléfine et hydrogène amené au réacteur.

Un donneur externe d'électron peut être présent dans le milieu de polymérisation, en particulier lorsqu'une oléfine présentant au moins trois atomes de carbone doit être polymérisée ou copolymérisée. Ce donneur externe d'électron peut être un silane de formule SiR¹ R² R³ R⁴ dans laquelle l'un au moins des groupements lié au silicium est un groupement alkoxyde de formule (-OR⁵) dans laquelle R⁵ représente un groupement hydrocarboné saturé linéaire contenant 1 à 4 atomes de carbone, et de préférence 1 ou 2 atomes de carbone, les autres groupements liés au silicium pouvant être des groupements hydrocarbonés contenant de préférence 1 à 8 atomes de carbone. Ce donneur externe d'électron peut être un diéther décrit dans la demande de brevet EP 0361493.

Dans les exemples qui suivent les caractéristiques des polymères ont été déterminées par les techniques suivantes :
- le SPAN: est égal au rapport (D90-D10)/D50 dans lequel D90, D10 et D50 représentent le diamètre en dessous duquel se trouvent respectivement 90 %, 10 % et 50 % en poids des particules. Pour les particules de support et de composante, les D90, D10 et D50 sont mesurés à l'aide d'un granulomètre à diffraction laser MALVERN C 2600. Pour les particules de polymère, les D90, D10 et D50 sont mesurés par tamisage.
- la morphologie: est déterminée par observation au microscope électronique à balayage pour les particules de germe, support et composante, et par observation au microscope optique pour les particules de polymère.
- (Ds/ds)ₘ, (Dg/dg)ₘ ,(Dc/dc)ₘ et (Dp/dp)ₘ ont été déterminées en calculant la moyenne respectivement des Ds/ds, Dg/dg, Dc/dc et Dp/dp sur 70 particules observées soit au microscope électronique à balayage pour les particules de germe, de support et de composante, soit au microscope optique pour les particules de polymère.
- Coulabilité : norme ASTM D1895
- MI₂: norme ASTM D 1238-E
- Ml5: norme ASTM D 1238-P
- MI₂₁: norme ASTM D 1238-F

### Exemple 1

### a) Préparation de germes

Dans un réacteur de 5 litres muni d'une agitation à pales, d'un système de régulation thermique par double-enveloppe, et d'une plaque filtrante en sa partie inférieure, on introduit sous azote :
- 300 g de chlorure de magnésium commercial contenant 0,3 % en poids d'eau constitué de particules dont le diamètre moyen est environ 2 mm,
- 3000 g de tétrahydrofurane (THF)
- 48 g de durène.

L'agitation est portée à 150 révolutions par minute et la température est portée à 65° C.

Après 12 heures, le solide est récupéré par filtration, il est lavé par 4000 ml d'hexane puis séché à 70 ° C pendant 3 heures sous balayage d'azote. On récupère finalement 528 g d'un solide blanc pulvérulent, essentiellement constitué d'un complexe (MgCl₂.1,5 THF). Ce solide est constitué de particules se présentant au microscope électronique à balayage sous la forme de polyèdres à 6 ou 8 faces. Le tableau 1 rassemble les caractéristiques granulométriques (D50 et SPAN) de ce solide dont on se sert comme germe par la suite. Par le test de la norme ASTM D1895, on constate que ces germes ne coulent pas. Ces germes présentent un rapport moyen (Dg/dg)ₘ de 3,6.

Ces germes présentent l'apparence de polyèdres possédant sensiblement deux plans de symétrie sensiblement perpendiculaires entre eux. De plus, ils se présentent sous la forme de polyèdres sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaires étant inférieure à la plus petite distance (d) séparant les deux cotés opposés des grandes faces allongées.

### b) Préparation d'un support

Dans un réacteur en verre de 2 litres de type autoclave Büchi muni d'un système d'agitation et d'une régulation de température, on introduit sous atmosphère d'azote et à température ambiante :
- 25 g des germes préparés en a),
- 500 ml d'hexane,
- 0,55 mole de n-buthyl éthyl magnésium sous la forme de solution à 20 % en poids dans l'heptane. Cette solution contient environ 0,1% en poids de traces d'aluminium sous la forme de triéthylaluminium.

Sous une agitation de 600 révolutions par minute, on porte la température du réacteur à 80° C en 30 minutes. On introduit ensuite à l'aide d'une pompe 3,17 moles de chlorure de tertiobutyle en 3 heures, après quoi on maintient les conditions d'agitation et de température pendant une heure. Le solide est alors filtré, lavé trois fois par 500 ml d'hexane à chaque fois, puis séché à 70 ° C pendant 4 heures sous balayage d'azote. On récupère finalement 79 g d'un support sous la forme d'un solide pulvérulent dont des caractéristiques sont données dans le tableau 1. Par le test de la norme ASTM D1895, on constate que la coulabilité du support est de 75 secondes.

Ce support est constitué de particules possédant sensiblement un axe de révolution contenant leur grand diamètre. Ces particules paraissent sensiblement exemptes d'angulosités lorsqu'elles sont observées au grossissement 200 au microscope électronique à balayage.

### Exemple 2

On procède comme pour l'exemple 1 sauf que le n-butyl éthyl magnésium est remplacé par 0,55 mole de dibutyl magnésium sous la forme d'une solution à 25 % en poids dans l'hexane.

On récupère finalement 98 g d'un support sous la forme d'un solide pulvérulent dont des caractéristiques sont données dans le tableau 1. Ce support est constitué de particules possédant sensiblement un axe de révolution contenant leur grand diamètre. Ces particules paraissent sensiblement exemptes d'angulosités lorsqu'elles sont observées au grossissement 200 au microscope électronique à balayage.

### Exemple 3

On procède comme pour l'exemple 1 sauf qu'avant l'introduction de l'agent chlorant, on ajoute 0,013 mole de tri-n-hexyl aluminium.

On récupère finalement 88 g d'un support sous la forme d'un solide pulvérulent dont des caractéristiques sont données dans le tableau 1. Ce support est constitué de particules possédant sensiblement un axe de révolution contenant leur grand diamètre. Ces particules paraissent sensiblement exemptes d'angulosités lorsqu'elles sont observées au grossissement 200 au microscope électronique à balayage.

### Exemple 4

On procède comme pour l'exemple 3 sauf que le tri-n-hexylaluminium est remplacé par 0,013 mole de tétraisobutylaluminoxane. On récupère finalement 80 g d'un support sous la forme d'un solide pulvérulent dont des caractéristiques sont données dans le tableau 1. Ce support est constitué de particules possédant sensiblement un axe de révolution contenant leur grand diamètre. Ces particules paraissent sensiblement exemptes d'angulosités lorsqu'elles sont observées au grossissement 200 au microscope électronique à balayage.

### Exemple 5

On procède comme pour l'exemple 4 sauf que l'on remplace les germes de (MgCl₂.1,5 THF) par 12,5 g de germes de complexe (MgCl₂.0,4 THF), ce dernier ayant été obtenu par traitement thermique à 70°C sous balayage d'azote à la pression atmosphérique pendant 4 heures, de particules de (MgCl₂.1,5 THF). On récupère finalement 72 g d'un support sous la forme d'un solide pulvérulent dont des caractéristiques sont données dans le tableau 1.

### Exemple 6

On procède comme pour l'exemple 3, sauf que l'on remplace le tri-n-hexylaluminium par 0,013 mole de diéthyl(méthyléthylsilanolato)aluminium de formule (C₂H₅)₂Al-O-SiH(CH₃)(C₂H₅), commercialisé sous la marque siloxal H-1 par la société Schering. On récupère finalement 90 g d'un support sous la forme d'un solide pulvérulent dont des caractéristiques sont données dans le tableau 1.

### Exemple 7

On procède comme pour l'exemple 4 sauf que l'on remplace le chlorure de tertiobutyle par 0,818 moles de SiCl₄ sous la forme d'une solution à 20 % en volume dans l'hexane.

On récupère finalement 70 g de support sous la forme d'un solide pulvérulent dont des caractéristiques sont données dans le tableau 1.

### Exemple 8

### a) préparation de germes

On introduit 50 g de MgCl₂-α sous la forme d'une poudre de diamètre inférieur à 3 mm dans un broyeur à boulet de 430 ml purgé à l'azote contenant 25 g de billes en acier inoxydable de diamètre 14 mm, 44 g de billes en acier inoxydable de diamètre 11 mm, 16 g de billes en acier inoxydable de diamètre 7 mm. On broie à température ambiante en soumettant l'ensemble à un mouvement vertical vibratoire d'amplitude 6 cm et de fréquence 10 Hz pendant 12 heures. On récupère ainsi une poudre de MgCl₂ de forme δ dont des caractéristiques sont données dans le tableau 1.

### b) préparation d'un support

On opère comme dans l'exemple 7 sauf que l'on remplace les germes de MgCl₂.1,5 THF par 123 millimoles du MgCl₂-δ préparé au a). On récupère finalement 37 g d'un support sous la forme d'une poudre dont des caractéristiques sont données dans le tableau 1.

### Exemple 9

### a) Synthèse d'une composante catalytique solide

Dans un réacteur en verre de 500 cm³ équipé d'une régulation de température par double enveloppe et d'une agitation mécanique à pale, on introduit, après purge du réacteur à l'azote, 15 g de support obtenu selon l'exemple 1, puis 49 cm³ de TiCl₄. Le contenu du réacteur est alors chauffé 2 heures à 80°C sous une agitation de 200 révolutions par minute puis filtré et lavé trois fois par, à chaque fois, un mélange de 10 % en volume de TiCl₄ et 90 % en volume de toluène pendant 15 mn. Après filtration, le solide est séché pendant une heure à 80°C sous un balayage d'azote. On récupère finalement 10,5 g d'une composante catalytique solide sous la forme d'une poudre de D50 de 28 µm et de SPAN de 1,01. Cette composante contient 1,5 % en poids de THF et 3 % en poids de titane. Elle est composée de particules possédant sensiblement un axe de révolution contenant leur grand diamètre. Ces particules paraissent sensiblement exemptes d'angulosités lorsqu'elles sont observées au grossissement 200 au microscope électronique à balayage. Elles présentent un (Dc/dc)ₘ de 1,6.

### b) Polymérisation de l'éthylène en suspension

Dans un réacteur métallique de 2 litres muni d'une régulation de température par double enveloppe et d'un système d'agitation, on introduit à 40°C et sous azote 1 litre d'hexane, puis 6 millimoles de triisobutylaluminium, puis 20 mg de la composante catalytique préparée au a).

On introduit 1 bar de pression partielle d'azote dans le réacteur, puis celui-ci est porté à 85°C. La pression totale est ajustée avec l'azote à 3 bars absolus. On ajoute ensuite 4 bars de pression partielle d'hydrogène, puis 6 bars de pression partielle d'éthylène.

La pression totale est maintenue à 13 bars absolus par addition d'éthylène pendant 2 heures à 85°C, l'agitation étant de 400 révolutions par minute. A la fin de cette période, on décomprime à la pression atmosphérique et on refroidit à la température ambiante et l'on récupère le polymère. La productivité de la polymérisation a été de 15 300 g par g de composante catalytique solide. Le polymère présente les caractéristiques suivantes : D50 = 663 µm, SPAN = 1,14, RMI = 3,21, MFR = 30,36 et Ml₂ = 5,60. Les particules de polymère présentent un (Dp/dp)ₘ de 1,55. Elles paraissent sensiblement exemptes d'angulosités lorsqu'elles sont observées au grossissement 20 au microscope optique.

### Exemple 10

### a) synthèse en suspension d'un prépolymère

Dans un réacteur sec de 1 litre, on introduit sous azote et sous une agitation de 250 révolutions par minute à 40°C, 0,8 litre d'hexane, puis 3,2 millimoles de trihexylaluminium (THA), puis 1 g de la composante catalytique solide préparée à l'exemple 9, puis 1,5 bars d'hydrogène. Après 5 minutes d'homogénéisation, on introduit de l'éthylène avec un débit de 10 Nl/h pendant 30 minutes puis avec un débit de 45 Nl/h pendant 2 heures. L'injection d'éthylène est alors stoppée, le réacteur est décomprimé à la pression atmosphérique, et l'intérieur du réacteur est balayé à l'azote sous agitation de 50 révolutions par minutes. La température est alors portée à 60°C et l'hexane est éliminé par balayage d'azote.

Après retour à la température ambiante, on recueille finalement 98,5 grammes de prépolymère contenant 850 ppm d'aluminium. Le degré de prépolymérisation a été de 98,5 g de prépolymère par gramme de composante catalytique solide. Ce prépolymère est conservé sous azote.

### b) synthèse en phase gazeuse d'un polymère

Dans un réacteur de 8,2 litres équipé d'une régulation thermique par double enveloppe et d'un système d'agitation, on introduit à 85°C, après purge à l'azote, et sous une agitation de 400 révolutions par minutes :
- 100 g de polyéthylène provenant d'un essai identique, puis
- 0,87 millimoles de trihexylaluminium.

On fait alors le vide dans le réacteur (pression absolue résiduelle : 2 Pa), puis on injecte.
- 3,75 bars de pression partielle d'hydrogène,
- 8 bars de pression partielle d'éthylène.

On introduit alors 10 g du prépolymère préparé au a) par poussée à l'azote jusqu'à ce que la pression totale à l'intérieur du réacteur atteigne 21 bars absolus. On maintient la pression à cette valeur par addition d'éthylène pendant 2 heures, puis l'on décomprime et refroidit le réacteur. On recueille finalement le polyéthylène. La productivité a été de 10 047 g de polyéthylène par gramme de composante catalytique solide. Le polymère obtenu présente les caractéristiques suivantes :
- Dp50 = 808 µm
- Masse volumique apparente (non tassée) : 0,417 g/cm³
- Coulabilité : 20 secondes
- Ml₂ = 1,89
- RMI = Ml₅/Ml₂ = 3,36
- MFR = Ml₂₁/Ml₂ = 38,7

La poudre de polyéthylène présente une morphologie homothétique à celle du support et présente un (Dp/dp) de 1,6. Elle est constituée de particules possédant sensiblement un axe de révolution contenant leur grand diamètre. Ces particules paraissent sensiblement exemptes d'angulosités lorsqu'elles sont observées au grossissement 20 au microscope optique.

### Exemple 11

### a) Préparation d'un support

On procède comme pour l'exemple 1 sauf que pour la préparation du support, on introduit 0,1 mole de n-butyl éthyl magnésium au lieu de 0,55 mole, et sauf que l'on remplace le chlorure de tertiobutyle par 0,45 mole de SiCl₄.

On obtient ainsi des particules de support présentant sensiblement un axe de révolution contenant leur grand diamètre. D'autres caractéristiques de ce support sont indiquées dans le tableau 1. Le rapport moyen (Ds/ds)m est de 3,2.

### b) Préparation d'une composante catalytique solide

On traite le support préparé en a) comme le support dans l'exemple 9. On obtient ainsi une composante catalytique solide sous la forme d'une poudre présentant un D50 de 37µm et un SPAN de 1,7. Le rapport moyen (Dc/dc)m est de 3,2.

### c) Préparation d'un prépolymère

Dans un réacteur sec d'un litre, on introduit sous azote et sous agitation de 250 révolutions par minute, à 40° C, 0,8 litre d'hexane puis 13,8 millimole de trihexylaluminium, puis 1 g de la composante catalytique solide préparée en b), puis 1,5 bars d'hydrogène. Après cinq minutes d'homogénéisation, on introduit de l'éthylène avec un débit contrôlé de 95 NI en deux heures. L'injection d'éthylène est alors stoppée, le réacteur est décomprimé à la pression atmosphérique et l'intérieur du réacteur est balayé à l'azote sous une agitation de 50 révolutions par minutes. La température est portée à 60° C et l'hexane est éliminé par balayage à l'azote.

Après retour à la température ambiante, on recueille finalement 97,8 grammes de prépolymère contenant 3040 ppm en poids d'aluminium. Le degré de prépolymérisation a été de 97,8 grammes de prépolymère par gramme de composante catalytique solide.

### d) Préparation d'un polyéthylène par polymérisation en phase gazeuse

Dans un réacteur de 8,2 litres équipé d'une régulation thermique par double enveloppe et d'un système d'agitation, on introduit à 90° C après purge à l'azote et sous agitation de 400 révolutions par minute, 100 g de polyéthylène provenant d'un essai identique. On fait le vide dans le réacteur (pression résiduelle d'azote : 2 Pa, puis on injecte 6 bars de pression partielle d'hydrogène puis 8 bars de pression partielle d'éthylène. On introduit ensuite 10 grammes de prépolymère préparé en c) par poussée à l'azote jusqu'à ce que la pression absolue à l'intérieur du réacteur atteigne 21 bars. Cette dernière pression est maintenue constante pendant deux heures par addition d'éthylène, à la suite de quoi le réacteur est refroidit et décomprimé.

On recueille finalement 479 grammes de polyéthylène (charge initiale déduite). La productivité a été de 4 700 grammes de polyéthylène par gramme de composante catalytique solide. Le polymère obtenu présente les caractéristiques suivantes :
D50 = 411 µm
SPAN = 1,06
Coulabilité par le test de la norme ASTM D1895 : 30 secondes
Ml₂ = 10,3
RMI = Ml₅/Ml₂ = 2,63

Cette poudre de polymère présente une morphologie sensiblement homothétique de celle du support préparé en a). Son (Dp/dp) est de 3,3.

### Exemple 12

### a) Préparation d'un support

Dans un réacteur de deux litres muni d'une régulation de température par double enveloppe et d'un système d'agitation, on introduit à température ambiante:
- 25 g des germes préparés comme dans l'exemple 1 a), puis,
- 500 ml d'hexane, puis,
- 4 ml de THF, puis,
- 0,1 mole de n-buthyl éthyl magnésium sous la forme de solution à 20 % en poids dans l'heptane.

On met le réacteur sous une légère pression d'azote, on règle l'agitation à 400 révolutions par minute et l'on monte la température à 75° C. On introduit alors à l'aide d'une pompe une solution de 0,15 mole de SiCl₄ dans 62,8 ml d'hexane à un débit de 200 ml/heure, à la suite de quoi, la suspension est maintenue à 80° C une heure sous une agitation de 400 révolutions par minute. On filtre et on lave le solide obtenu par 500 ml d'hexane pendant 30 minutes. On répète cette opération de filtration et de lavage à l'hexane encore deux fois.

Le solide est alors séché à 70° C pendant quatre heures sous balayage d'azote. On récupère finalement 32 grammes de support présentant un SPAN de 1,38. Ce support présente sensiblement la composition (MgCl₂-1 THF). Le (Ds/ds) est de 3,22.

Ces particules présentent sensiblement un axe de révolution contenant leur grand diamètre. Elles paraissent sensiblement exemptes d'angulosités au microscope électronique (grossissement : 200).

### b) Préparation d'une composante catalytique

Dans un réacteur de 300 ml muni d'une régulation de température et d'un système d'agitation, on introduit à 50° C, après purge à l'azote, 10 g du support préparé en a) puis 32,5 ml de toluène, et 97,5 ml de TiCl₄ pur. La température est portée à 90° C et l'on introduit alors 1,46 ml de dibutylphtalate. On laisse deux heures sous agitation à cette température. Après filtration, on procède au traitement suivant : on introduit 6,5 ml de TiCl₄ et 123,5 ml de toluène, on porte la température à 100° C pendant une heure et l'on filtre. Ce traitement est recommencé encore quatre fois. Le solide est ensuite lavé trois fois, à chaque fois par 100 ml d'hexane à 60° C pendant 10 minutes. Le solide est ensuite séché à 60° C pendant deux heures sous un courant d'azote. La composante catalytique ainsi obtenue contient 2 % en poids de titane et 11,8 % de dibutylphtalate. Elle présente un SPAN de 1,35 et un rapport (Dc/dc)ₘ de 3,1.

### c) Synthèse de polypropylène

Dans un réacteur de 3,5 litres en inox, muni d'une agitation magnétique et d'une régulation thermique par double enveloppe, on introduit à 30° C, dans l'ordre : 1,2 NI d'hydrogène, 2,4 litres de propylène liquide, 24 millimoles de triéthylaluminium et 2,4 millimoles de cyclohexyl méthyl diméthoxysilane (CHMDMS). Après 10 minutes d'agitation, on introduit 20 mg de la composante catalytique préparée au b). La température est portée à 70° C et maintenue pendant une heure à cette valeur. Le réacteur est ensuite refroidi et la pression abaissée à la pression atmosphérique. La productivité a été de 28200 grammes de polymère par gramme de composante catalytique. L'indice d'isotacticité de la poudre de polypropylène, mesuré par extraction à l'heptane du polymère amorphe à l'aide d'un appareil Kumagawa, est de 97,4 % en poids. Le melt-index mesuré suivant la norme ASTM D1238 méthode 2 est de 3,1. La coulabilité de cette poudre est de 23 secondes. Les particules de polypropylène présentent une morphologie sensiblement homothétique de celles du support. Elles présentent sensiblement un axe de révolution contenant leur grand diamètre et paraissent exempte d'angulosité au microscope optique (grossissement : 20). Le (Dp/dp)m est de 3,1.

### Exemple 13 (comparatif)

On procède comme pour l'exemple 1 sauf que l'on ne prépare pas de germe et que l'on n'en introduit donc pas pour la fabrication du support.

On obtient une poudre présentant les caractéristiques suivantes :
D50 = 56,45 µm,
SPAN = 5,82.

La poudre ne présente aucune morphologie controlée, sans axe de symétrie.

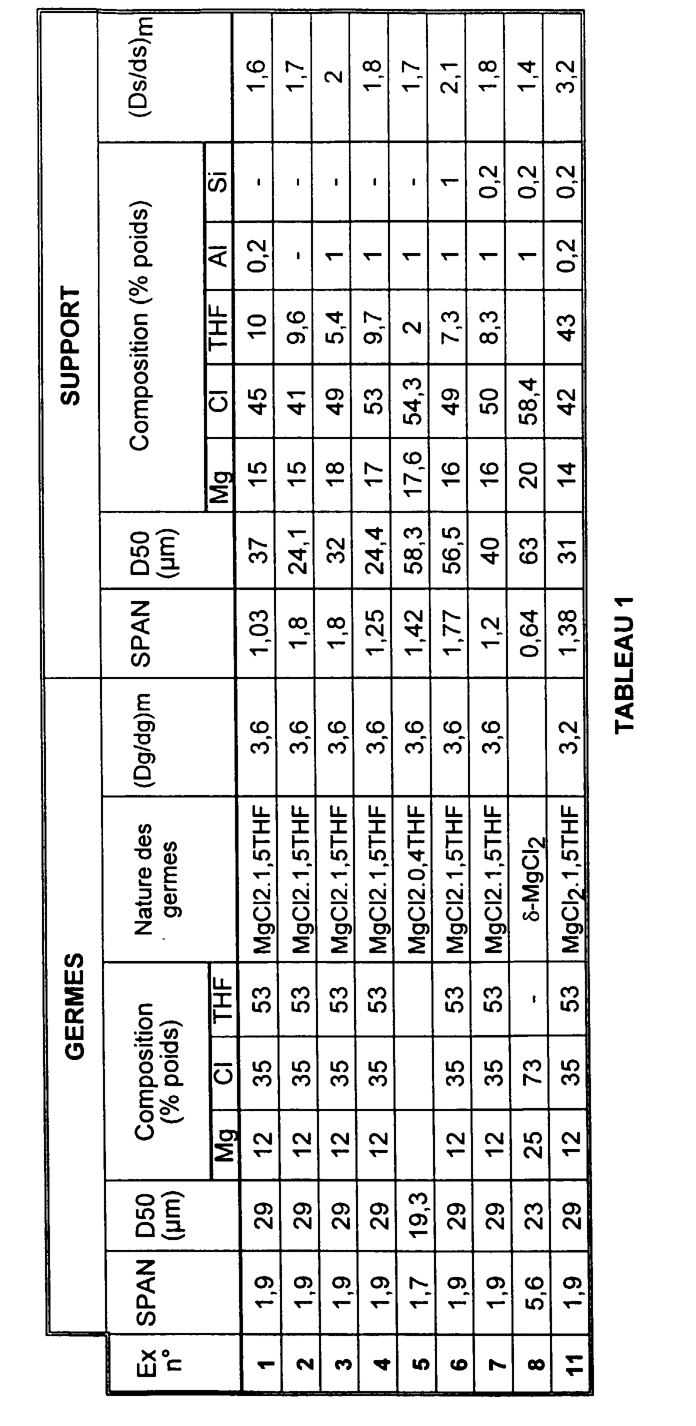

## Revendications

1. Procédé de fabrication de particules comprenant du chlorure de magnésium comprenant une étape de mise en contact entre :
- des germes contenant plus de 30% en poids de chlorure de magnésium,
- un dérivé organique du magnésium,
- un agent chlorant du dérivé organique du magnésium.

2. Procédé selon la revendication 1 caractérisé en ce que les germes contiennent moins de 90 % en poids de carbone.

3. Procédé selon la revendication 1 ou 2 caractérisé en ce que les germes contiennent du chlorure de magnésium sous une forme apte à fixer du chlorure de titane.

4. Procédé selon l'une des revendications 1 à 3 caractérisé en ce que les germes comprennent du chlorure de magnésium de forme β ou δ.

5. Procédé selon l'une des revendications 1 à 4 caractérisé en ce que les germes comprennent un complexe de formule (MgCl₂.n solvant)

6. Procédé selon la revendication 5 caractérisé en ce que le solvant est le tétrahydrofuranne.

7. Procédé selon la revendication 5 ou 6 caractérisé en ce que n va de 1 à 2.

8. Procédé selon l'une des revendications 1 à 7 caractérisé en ce que le diamètre moyen des germes va de 1 à 100 µm.

9. Procédé selon l'une des revendications 1 à 8 caractérisé en ce que le SPAN des germes va de 0,4 à 6.

10. Procédé selon l'une des revendications 1 à 9 caractérisé en ce que le SPAN des germes est inférieur à 3.

11. Procédé selon l'une des revendications 1 à 10 caractérisé en ce que les germes présentent un rapport moyen de leur grand diamètre sur leur petit diamètre supérieur à 1,4.

12. Procédé selon la revendication 11 caractérisé en ce que les germes présentent un rapport moyen de leur grand diamètre sur leur petit diamètre supérieur à 1,6.

13. Procédé selon la revendication 12 caractérisé en ce que les germes présentent un rapport moyen de leur grand diamètre sur leur petit diamètre supérieur à 2,1.

14. Procédé selon la revendication 12 caractérisé en ce que les germes présentent un rapport moyen de leur grand diamètre sur leur petit diamètre supérieur à 3,1.

15. Procédé selon l'une des revendications 1 à 13 caractérisé en ce que les germes se présentent sous la forme de polyèdres possédant sensiblement deux plans de symétrie sensiblement perpendiculaires entre eux.

16. Procédé selon l'une des revendications 1 à 15 caractérisé en ce que les germes se présentent sous la forme de polyèdres sensiblement réguliers à six ou huit faces dont les faces deux à deux symétriquement opposées sont sensiblement parallèles et dont deux grandes faces allongées formant la face du dessus et la face du dessous d'un polyèdre, telles que dans chacune la plus grande diagonale (D) soit supérieure à la plus petite distance (d) séparant deux cotés opposés, sont entourées sensiblement perpendiculairement par les autres faces sensiblement rectangulaires formant les cotés dudit polyèdre, la longueur du plus petit coté (e) de chacune desdites faces sensiblement rectangulaires étant inférieure à la plus petite distance (d) séparant les deux cotés opposés des grandes faces allongées.

17. Procédé selon l'une des revendications 1 à 16 caractérisé en ce que le dérivé organique du magnésium est de formule R¹MgR² ou (R¹ MgR²).x(Al(R³)₃) dans lesquelles R¹ et R² pouvant être identiques ou différents, représentent des radicaux alkyles contenant de 2 à 12 atomes de carbone et R3 représente un radical alkyle contenant de 1 à 12 atomes de carbone.

18. Procédé selon l'une des revendications 1 à 17 caractérisé en ce que le milieu de mise en contact comprend un dérivé organique de l'aluminium.

19. Procédé selon la revendication 18 caractérisé en ce que le dérivé organique de l'aluminium est un aluminoxane ou un aluminosiloxane.

20. Procédé selon l'une des revendications 1 à 19 caractérisé en ce que l'agent chlorant est capable de réagir avec le dérivé organique du magnésium de façon à former des liaisons Mg-Cl.

21. Procédé selon la revendication 20 caractérisé en ce que l'agent chlorant est le chlorure de tertiobutyle.

22. Procédé selon la revendication 20 caractérisé en ce que l'agent chlorant est le tétrachlorure de silicium.

23. Procédé selon l'une des revendications 1 à 22 caractérisé en ce que les quantités d'agent chlorant et de dérivé organique du magnésium sont telles que le rapport molaire Cl/Mg va de 1 à 10.

24. Procédé selon l'une des revendications 1 à 23 caractérisé en ce que le milieu de mise en contact comprend un solvant inerte.

25. Procédé selon l'une des revendications 1 à 24 caractérisé en ce que la mise en contact est réalisée entre 10 et 140° C et de préférence entre 40 et 110°C.

26. Procédé selon l'une des revendications 1 à 25 caractérisé en ce que pour la mise en contact, on met d'abord en présence les germes, l'éventuel solvant inerte et le dérivé organique du magnésium, puis l'on ajoute à ces précédents constituants l'agent chlorant.

27. Procédé selon l'une des revendications 1 à 16 caractérisé en ce que le milieu de mise en contact ne contient pas d'éther-oxyde de formule R^{a}-O-R^{b} dans laquelle R^{a} et R^{b} sont des radicaux alkyle.

28. Procédé selon l'une des revendications 1 à 27 caractérisé en ce que le milieu de mise en contact ne contient pas d'éther cyclique.

29. Procédé selon l'une des revendications 1 à 28 caractérisé en ce que le milieu de mise en contact comprend un donneur d'électrons.

30. Procédé selon l'une des revendications précédentes, caractérisé en ce que les particules finales sont sensiblement exemptes d'angulosités.

## Patentansprüche

1. Verfahren zur Herstellung von Magnesiumchlorid enthaltenden Teilchen, daß einen Schritt des Zusammenbringens umfaßt von:
- Keimen, die mehr als 30 Gew.-% Magnesiumchlorid enthalten,
- einem organischen Magnesiumderivat,
- einem chlorierenden Mittel für die organische Magnesiumverbindung.

2. Verfahren nach Anspruch 1, dadurch gekennzeichnet, daß die Keime weniger als 90 Gew.-% Kohlenstoff enthalten.

3. Verfahren nach Anspruch 1 oder 2, dadurch gekennzeichnet, daß die Keime Magnesiumchlorid in einer Form enthalten, die geeignet ist, Titanchlorid zu binden.

4. Verfahren nach einem der Ansprüche 1 bis 3, dadurch gekennzeichnet, daß die Keime Magnesiumchlorid in β- oder δ-Form enthalten.

5. Verfahren nach einem der Ansprüche 1 bis 4, dadurch gekennzeichnet, daß die Keime einen Komplex der Formel (MgCl₂·n Lösungsmittel) enthalten.

6. Verfahren nach Anspruch 5, dadurch gekennzeichnet, daß das Lösungsmittel Tetrahydrofuran ist.

7. Verfahren nach Anspruch 5 oder 6, dadurch gekennzeichnet, daß n von 1 bis 2 reicht.

8. Verfahren nach einem der Ansprüche 1 bis 7, dadurch gekennzeichnet, daß der mittlere Durchmesser der Keime von 1 bis 100 µm reicht.

9. Verfahren nach einem der Ansprüche 1 bis 8, dadurch gekennzeichnet, daß der SPAN der Keime von 0,4 bis 6 reicht.

10. Verfahren nach einem der Ansprüche 1 bis 9, dadurch gekennzeichnet, daß der SPAN der Keime kleiner als 3 ist.

11. Verfahren nach einem der Ansprüche 1 bis 10, dadurch gekennzeichnet, daß die Keime ein mittleres Verhältnis ihres großen Durchmessers zum kleinen Durchmesser von mehr als 1,4 aufweisen.

12. Verfahren nach Anspruch 11, dadurch gekennzeichnet, daß die Keime einen mittleren Durchmesser ihres großen Durchmessers zu ihrem kleinen Durchmesser von mehr als 1,6 aufweisen.

13. Verfahren nach Anspruch 12, dadurch gekennzeichnet, daß die Keime einen mittleren Durchmesser ihres großen Durchmessers zu ihrem kleinen Durchmesser von mehr als 2,1 aufweisen.

14. Verfahren nach Anspruch 12, dadurch gekennzeichnet, daß die Keime einen mittleren Durchmesser ihres großen Durchmessers zu ihrem kleinen Durchmesser von mehr als 3,1 aufweisen.

15. Verfahren nach einem der Ansprüche 1 bis 13, dadurch gekennzeichnet, daß die Keime in Form von Polyedern vorliegen, die im wesentlichen zwei deutlich zueinander senkrechte Symmetrieebenen besitzen.

16. Verfahren nach einem der Ansprüche 1 bis 15, dadurch gekennzeichnet, daß die Keime in Form von im wesentlichen gleichmäßigen Polyedern mit sechs oder acht Seiten vorliegen, von denen die beiden sich symmetrisch gegenüberliegenden Seiten merklich parallel sind und zwei große gestreckte Seiten, die die Oberseite und die Unterseite des Polyeders bilden, so daß in jeder die größte Diagonale (D) länger ist als die kleinste, zwei gegenüberliegende Seiten trennende Entfernung, von den im wesentlichen senkrecht zu ihnen angeordneten und ungefähr rechtwinkligen anderen Seiten umgeben sind, die die Seiten des genannten Polyeders bilden, wobei die Länge der kleinsten Seite (e) jeder der genannten im wesentlichen rechtwinkligen Seiten kleiner ist als die kleinste die zwei gegenüberliegenden Seiten der großen gestreckten Seiten trennende Entfernung (d).

17. Verfahren nach einem der Ansprüche 1 bis 16, dadurch gekennzeichnet, daß die organische Magnesiumverbindung der Formel R¹MgR² oder (R¹MgR²)·x(Al(R³)₃) entspricht, in denen die gleichen oder verschiedenen R¹ und R² Alkylreste mit 2 bis 12 Kohlenstoffatomen und R³ einen Alkylrest mit 1 bis 12 Kohlenstoffatomen bedeuten.

18. Verfahren nach einem der Ansprüche 1 bis 17, dadurch gekennzeichnet, daß das Reaktionsmilieu eine organische Aluminiumverbindung enthält.

19. Verfahren nach Anspruch 18, dadurch gekennzeichnet, daß die organische Aluminiumverbindung ein Aluminoxan oder ein Aluminosiloxan ist.

20. Verfahren nach einem der Ansprüche 1 bis 19, dadurch gekennzeichnet, daß das chlorierende Mittel dazu geeignet ist, mit der organischen Magnesiumverbindung derart zu reagieren, daß Mg-Cl-Bindungen gebildet werden.

21. Verfahren nach Anspruch 20, dadurch gekennzeichnet, daß das chlorierende Mittel Tertiobutylchlorid ist.

22. Verfahren nach Anspruch 20, dadurch gekennzeichnet, daß das chlorierende Mittel Siliciumtetrachlorid ist.

23. Verfahren nach einem der Ansprüche 1 bis 22, dadurch gekennzeichnet, daß die Mengen des chlorierenden Mittels und der organischen Magnesiumverbindung derart ausgewählt sind, daß das Molverhältnis Cl/Mg von 1 bis 10 reicht.

24. Verfahren nach einem der Ansprüche 1 bis 23, dadurch gekennzeichnet, daß das Reaktionsmilieu ein inertes Lösungsmittel enthält.

25. Verfahren nach einem der Ansprüche 1 bis 24, dadurch gekennzeichnet, daß das Zusammenbringen zwischen 10 und 140 °C und vorzugsweise zwischen 40 und 110 °C durchgeführt wird.

26. Verfahren nach einem der Ansprüche 1 bis 25, dadurch gekennzeichnet, daß man für das Zusammenbringen zunächst die Keime, eventuell das inerte Lösungsmittel und die organische Magnesiumverbindung zusammengibt und anschließend zu diesen genanntenn Bestandteilen das chlorierende Mittel hinzufügt.

27. Verfahren nach einem der Ansprüche 1 bis 16, dadurch gekennzeichnet, daß das Reaktionsmilieu kein Etheroxid der Formel R^{a}-O-R^{b} enthält, in der R^{a} und R^{b} Alkylreste sind.

28. Verfahren nach einem der Ansprüche 1 bis 27, dadurch gekennzeichnet, daß das Reaktionsmilieu keinen cyclischen Ether enthält.

29. Verfahren nach einem der Ansprüche 1 bis 28, dadurch gekennzeichnet, daß das Reaktionsmilieu einen Elektronendonator enthält.

30. Verfahren nach einem der vorangehenden Ansprüche, dadurch gekennzeichnet, daß die endgültigen Teilchen fast frei von Ecken sind.

## Claims

1. Process for the manufacture of particles comprising magnesium chloride, this process comprising a step of placing in contact between:
- seeds containing more than 30% by weight of magnesium chloride,
- an organomagnesium derivative,
- a chlorinating agent for the organomagnesium derivative.

2. Process according to Claim 1, characterized in that the seeds contain less than 90% by weight of carbon.

3. Process according to Claim 1 or 2, characterized in that the seeds contain magnesium chloride in a form which is capable of fixing titanium chloride.

4. Process according to one of Claims 1 to 3, characterized in that the seeds comprise magnesium chloride in β or δ form.

5. Process according to one of Claims 1 to 4, characterized in that the seeds comprise a complex of formula (MgCl₂·n solvent).

6. Process according to Claim 5, characterized in that the solvent is tetrahydrofuran.

7. Process according to Claim 5 or 6, characterized in that n ranges from 1 to 2.

8. Process according to one of Claims 1 to 7, characterized in that the average diameter of the seeds ranges from 1 to 100 µm.

9. Process according to one of Claims 1 to 8, characterized in that the SPAN of the seeds ranges from 0.4 to 6.

10. Process according to one of Claims 1 to 9, characterized in that the SPAN of the seeds is less than 3.

11. Process according to one of Claims 1 to 10, characterized in that the seeds have an average ratio of their large diameter to their small diameter of greater than 1.4.

12. Process according to Claim 11, characterized in that the seeds have an average ratio of their large diameter to their small diameter of greater than 1.6.

13. Process according to Claim 12, characterized in that the seeds have an average ratio of their large diameter to their small diameter of greater than 2.1.

14. Process according to Claim 12, characterized in that the seeds have an average ratio of their large diameter to their small diameter of greater than 3.1.

15. Process according to one of Claims 1 to 13, characterized in that the seeds are in the form of polyhedra substantially possessing two planes of symmetry which are substantially perpendicular to each other.

16. Process according to one of Claims 1 to 15, characterized in that the seeds are in the form of substantially regular six- or eight-faced polyhedra, the symmetrically opposite paired faces of which are substantially parallel and two large elongated faces of which forming the top face and the bottom face of a polyhedron, such that in each the largest diagonal (D) is greater than the smallest distance (d) separating two opposite sides, are substantially perpendicularly surrounded by the other substantially rectangular faces forming the sides of the said polyhedron, the length of the shortest side (e) of each of the said substantially rectangular faces being shorter than the shortest distance (d) separating the two opposite sides of the large elongated faces.

17. Process according to one of Claims 1 to 16, characterized in that the organomagnesium derivative is of formula R¹MgR² or (R¹MgR²)·x(Al(R³)₃) in which R¹ and R², which may be identical or different, represent alkyl radicals containing from 2 to 12 carbon atoms and R³ represents an alkyl radical containing from 1 to 12 carbon atoms.

18. Process according to one of Claims 1 to 17, characterized in that the medium of placing in contact comprises an organoaluminium derivative.

19. Process according to Claim 18, characterized in that the organoaluminium derivative is an aluminoxane or an aluminosiloxane.

20. Process according to one of Claims 1 to 19, characterized in that the chlorinating agent is capable of reacting with the organomagnesium derivative so as to form Mg-Cl bonds.

21. Process according to Claim 20, characterized in that the chlorinating agent is tert-butyl chloride.

22. Process according to Claim 20, characterized in that the chlorinating agent is silicon tetrachloride.

23. Process according to one of Claims 1 to 22, characterized in that the amounts of chlorinating agent and of organomagnesium derivative are such that the Cl/Mg molar ratio ranges from 1 to 10.

24. Process according to one of Claims 1 to 23, characterized in that the medium of placing in contact comprises an inert solvent.

25. Process according to one of Claims 1 to 24, characterized in that the placing in contact is performed between 10 and 140°C and preferably between 40 and 110°C.

26. Process according to one of Claims 1 to 25, characterized in that, for the placing in contact, the seeds, the optional inert solvent and the organomagnesium derivative are first placed together, followed by addition of the chlorinating agent to the above constituents.

27. Process according to one of Claims 1 to 16, characterized in that the medium of placing in contact contains no ether oxide of formula R^{a}-O-R^{b} in which R^{a} and R^{b} are alkyl radicals.

28. Process according to one of Claims 1 to 27, characterized in that the medium of placing in contact contains no cyclic ether.

29. Process according to one of Claims 1 to 28, characterized in that the medium of placing in contact comprises an electron donor.

30. Process according to one of the preceding claims, characterized in that the final particles are sucstantially free of rough edges.
